# EUROPÄISCHE PATENTANMELDUNG

(11) **EP 1 970 843 A1**
(43) Veröffentlichungstag der Anmeldung: **17.09.2008**
(21) Anmeldenummer: 08002490.4
(22) Anmeldetag: 11.02.2008
(51) Int. Cl.: G06Q 10/00

(54) **Verfahren und Vorrichtung zur Bestimmung des Fliessverhaltens von Gefahrstoffen bei Havarien**

(30) Priorität: 28.02.2007 DE 102007010146
(71) Anmelder: Oeko-Consult Glock AG, 36151 Burghaun (DE)
(72) Erfinder: Glock, Wilfried, 36151 Burghaun (DE)
(74) Vertreter: Tappe, Hartmut

(57) **Zusammenfassung**

Die Erfindung betrifft ein Verfahren und eine Vorrichtung zur Bestimmung des Fließverhaltens von Gefahrstoffen (01) bei Havarien (02). Die Vorrichtung umfasst hierzu mindestens eine Eingabevorrichtung (07), mindestens eine Gefahrstoff-Datenbank (10), mindestens eine hydrogeologische Umwelt-Datenbank (11) und mindestens eine hydrotechnische Einrichtungs-Datenbank (12). Des Weiteren umfasst die Vorrichtung mindestens eine Berechnungsvorrichtung (09) und mindestens eine Ausgabevorrichtung (08) zur Ausgabe von Daten. Die Eingabevorrichtung (07) übermittelt eingegebene Daten über Havarieort (03) und Art des Gefahrstoffs (01) an die Berechnungsvorrichtung (09), die mithilfe von Daten der Gefahrstoff-Datenbank (10), der hydrogeologische Umwelt-Datenbank (11) und der hydrotechnische Einrichtungs-Datenbank (12) Ausbreitungs- und Eindringungsdaten des Gefahrstoffs (01) berechnet, besonders schützenswerten Einrichtungen im Fließbereich des Gefahrstoffs (01) und/oder Absperrmöglichkeiten bestimmt, und über die Ausgabevorrichtung (08) diese bestimmten Daten ausgibt.

## Beschreibung

Die Erfindung betrifft ein Verfahren zur Bestimmung des Fließverhaltens von Gefahrstoffen bei Havarien, wie Unfällen, Tanklecks, Rohrbrüchen oder Ähnlichem. Des Weiteren betrifft die Erfindung eine Vorrichtung zur Bestimmung des Fließverhaltens von Gefahrstoffen.

Die zunehmenden Transporte von gefährlichen Gütern auf Straßen, Schienen oder auf dem Luftweg sind mit erheblichen Risiken für Menschen und Umwelt verbunden. Des Weiteren nimmt die Verwendung von Gefahrstoffen, wie beispielsweise chemische Stoffe, radioaktive Stoffe und dergleichen, die der Umwelt schädlich sein können, in Fabrikationsanlagen wie chemischen Prozessanlagen, Energiegewinnungsanlagen und dergleichen zu. Im Zuge dessen kommt es vermehrt zu Unfällen mit Gefahrstoffen. Ereignen sich Unfälle im Umgang mit diesen Gefahrstoffen, so werden regelmäßig lediglich lokale Maßnahmen getroffen, um das Auslaufen oder eine weitere Verschmutzung der unmittelbaren Umwelt zu verhindern. Insbesondere erweist es sich als problematisch, Gefahrstoffe, die in ein Kanalsystem gelangt sind, wirkungsvoll aufzuhalten, so dass sich in diesen Fällen weitläufige und überregionale Verschmutzungen ergeben.

In jüngster Zeit wurden von verschiedenen Kommunen und Ländern Kanalinformationssysteme aufgebaut, die Daten über das Entwässerungssystem, insbesondere über Kanäle, Gräben und die dazugehörigen Bauwerke, wie Vor- und Sammelfluter, mit den Attributen "Lage", "Höhe", "verwendete Baumaterialien", "Zustand", "hydraulisches Umfeld", "Fließrichtung" und dergleichen erfassen. Diese Daten des Kanalinformationssystems können in hydrotechnischen Einrichtungsdatenbanken gespeichert werden und geben verlässlichen Aufschluss über die Struktur der Entwässerungssysteme, so dass bei Havarien von Gefahrstoffen in Kenntnis der Fließrichtung bereits auf Basis der Daten der hydrotechnischen Einrichtungs-Datenbank planbar ist, wo Gegenmaßnahmen im Entwässerungssystem getroffen werden können.

Es ist dabei geplant, in den nächsten Jahren, insbesondere entlang von Bundesautobahnen und mehrspurigen Bundesstraßen, in schützenswerten Gebieten wie Trinkwasserversorgungsgebieten, Naturschutzgebieten und ähnlichen gefahrstoffsensitiven Räumen, sowie an Tank- und Rastanlagen die Daten für das Kanalinformationssystem zu vervollständigen. Auch in größeren chemischen Anlagen und Kraftwerkseinrichtungen sind umfassende Daten über das Entwässerungssystem vorhanden und geeignete Absperrmaßnahmen bekannt, so dass bei rechtzeitiger Erkennung von Gefahrstoffaustritt und Kenntnis der Fließrichtung bereits jetzt manuell geeignete Abwehrmaßnahmen getroffen werden können.

Bei der Erfassung der Kanalsysteminformationsdaten, die in der hydrotechnischen Einrichtungs-Datenbank abgelegt werden, werden insbesondere Bundesautobahnabschnitte, die in irgendeiner Form schützenswerte Gebiete (Trinkwasserschutzzonen I, II, III, gewässergefährdete Bereiche, sonstige Schutzzonen) oder Industriestandorte, Bahnhöfe, Flughäfen tangieren oder durchqueren, sämtliche Tank- und Rastanlagen an den Bundesautobahnen, sowie potentielle Abstellflächen für Fahrzeuge und alle vierstreifigen Bundesstraßen mit autobahnähnlichem Ausbau, die in irgendeiner Form schützenswerte Gebiete tangieren oder durchqueren, erfasst. Bei der Erfassung dieser Kanalinformationssystemdaten wird eine Sichtung und Bewertung vorhandener Bestandsanlagen von Entwässerungssystemen (Kanäle, Gräben, Drainagen, Kontrollbauwerke) durchgeführt. Hierzu wird eine Ergänzung fehlender Daten auf Grundlagen örtlicher Vermessungen, stichpunktartiger örtlicher Überprüfung vorhandener Bestandsdaten etc. durchgeführt, sowie eine Erfassung der Kontroll- und sonstiger Bauwerke der Abwasserentsorgung vorgenommen. Insbesondere kann eine Videobefahrung von kritischen Punkten des Kanalsystems vorgenommen werden.

Sind diese Daten in der hydrotechnischen Einrichtungs-Datenbank abgelegt, so lassen sich daran anschließend Längsschnitte des Entwässerungssystems mit Festlegung von Fliesswegverläufen sowie Schachtdatenpläne erstellen, und bereits fluiddynamische Betrachtungen des Fließwegumfeldes, Fließmengen und Fließgeschwindigkeiten anstellen, sowie zentrale Absperrmöglichkeiten an Gräben und Kanälen treffen. Des Weiteren können bereits Pläne über Zufahrtsmöglichkeiten für Notfalldienste zu diesen Punkten erstellt werden. Im Rahmen der Erstellung der hydrotechnischen Einrichtungs-Datenbank wird insbesondere die Identifizierung von besonders schützenswerten Einrichtungen wie Trinkwasservorräte, Grundwasseransammlungen, Zuflüsse zu Teichen, Seen, Bächen oder Flüssen vorgenommen und mit den technischen Absperrmöglichkeiten in Beziehung gesetzt.

Im Rahmen des Aufbaus eines solchen Kanalinformationssystems werden weiterhin Daten über Oberflächenbeschaffenheit, Erdreich, versiegelte Flächen und Oberflächenfließwege in den oben genannten Gebieten gesammelt und in einer hydrogeologischen Umwelt-Datenbank abgelegt. Diese hydrogeologische Umwelt-Datenbank beschreibt das unmittelbare Umfeld eines möglichen Havarieortes, insbesondere den Weg eines Gefahrstoffes vom Auslaufort bis zur Einleitung in das Entwässerungssystem. Diese Oberflächen- und Erdreichbeschaffenheitsdaten, die in einer hydrogeologischen Umwelt-Datenbank gesammelt werden, beschreiben im Gegensatz zu den Daten der hydrotechnischen Einrichtungs-Datenbank die unmittelbare Auswirkung des Auslaufens von Gefahrstoffen auf die umgebende Oberfläche, das Erdreich und den Weg bis zur Einleitung in das Entwässerungssystem.

In der Regel sind hydrogeologische Umwelt-Datenbanken und hydrotechnische Einrichtungsdatenbanken identisch, oder teilen zumindest gemeinsame Daten. Diese beiden Datenbanken liegen zumindest in verteilter Form bei Straßenmeistereien, Verkehrsministerien, Straßenbauämtern oder sonstigen Infrastrukturverwaltungs- und Instandsetzungsbehörden vor.

Der Erfindung liegt die Aufgabe zugrunde, ein Verfahren und eine Vorrichtung zur Bestimmung des Fließverhaltens von Gefahrstoffen bei Havarien vorzuschlagen, derart, dass im Falle des Austretens von Gefahrstoffen beruhend auf Daten der hydrogeologischen Umwelt-Datenbank und der hydrotechnischen Einrichtungs-Datenbank eine Prognose über das Fließverhalten des Gefahrstoffes berechnet wird, damit rechtzeitig entsprechende Gegenmaßnahmen zur Verhinderung von großflächiger Umweltverschmutzung getroffen werden können. Die dazu notwendigen Informationen sollen den zuständigen Stellen, insbesondere Polizei, Feuerwehr, Technisches Hilfswerk und Straßenmeistereien schnell zur Verfügung gestellt werden. Hierdurch können die Einsatzkräfte ermitteln, in welcher Richtung und mit welcher Geschwindigkeit sich eine explosive oder giftige Flüssigkeit bewegt. Dadurch können frühzeitig die entsprechenden Kanäle verschlossen und Straßen gesperrt werden. Somit ermöglicht die Erfindung, dass die Reaktionszeit nach einer Havarie auf einen Bruchteil der heute üblichen Zeiten sinkt. Es können einfach und gezielt Bauwerke angefahren werden, da deren Lage zusätzlich beispielsweise durch Luftaufnahmen dargestellt werden können. Letztlich ist es Ziel des Verfahrens, ein besonders kostengünstiges und einfaches Vorgehen zum Katastrophenmanagement bei Gefahrstoffhavarien vorzuschlagen, das es ermöglicht, auf bereits bestehende Daten einer hydrogeologischen Umwelt-Datenbank und einer hydrotechnischen Einrichtungs-Datenbank zuzugreifen, um mit geringem technischen Einsatz ein effektives Vorgehen der Notfallkräfte zu koordinieren.

Diese Aufgabe wird durch ein Verfahren mit den Merkmalen des Patentanspruchs 1 und eine Vorrichtung mit den Merkmalen des Patentanspruchs 22 gelöst.

Vorteilhafte Ausgestaltungen der Erfindung sind Gegenstand der Unteransprüche.

Das erfindungsgemäße Verfahren ist dadurch gekennzeichnet, dass folgende Verfahrensschritte ausgeführt werden:
Bereitstellung der Koordinaten des Havarieortes und der Identifikation des Gefahrstoffes,
Bereitstellung von Fließ- und Gefährdungsdaten des Gefahrstoffes aus einer Gefahrstoffdatenbank, beruhend auf der Art des Gefahrstoffes,
Bereitstellung von hydrogeologischen Umweltdaten im Umfeld des Havarieortes aus einer hydrogeologischen Umwelt-Datenbank,
Bereitstellung der Daten von hydrotechnischen Einrichtungen aus einer hydrotechnischen Einrichtungs-Datenbank
Berechnung des Ausbreitungs- und Eindringungsverhaltens des Gefahrstoffes ins Erdreich und Entwässerungssystem, insbesondere der daraus resultierenden Grundwasserverunreinigung, insbesondere Fließrichtung und -geschwindigkeit der Gefahrstoffverunreinigung, beruhend auf den Fließ- und Gefährdungsdaten des Gefahrstoffes und der hydrogeologischen Umweltdaten,
Bestimmung von besonders schützenswerten Einrichtungen im Fließbereich des Gefahrstoffes und/oder Absperrmöglichkeiten, basierend auf der Berechnung des Ausbreitungs- und Eindringungsverhaltens des Gefahrstoffe, aus der hydrotechnischen Einrichtungsdatenbank,
Ausgabe von Daten über mögliche Absperr- und Gegenmaßnahmen, beruhend auf den bestimmten Absperrmöglichkeiten und den bestimmten besonders schützenswerten Einrichtungen.

Die Koordinaten des Havarieortes, also eine örtliche Lokalisierung des Auslaufens des Gefahrstoffes, können beispielsweise basierend auf der Meldung von Notfalldiensten, wie Polizei oder Feuerwehr, oder Verkehrsüberwachungseinrichtungen erfolgen.

Basierend auf der Identifikation des Gefahrstoffes kann aus einer Gefahrstoffdatenbank eine Bestimmung der Fließ- und Gefährdungsdaten des Gefahrstoffes vorgenommen werden. Dies ist insbesondere wichtig, da zähflüssige Gefahrstoffe ein anderes Fließverhalten, und damit einen anderen zeitlichen Verlauf des Fließgeschehens aufweisen, als dünnflüssige oder lösliche Gefahrstoffe, die mittels umgebenden Wassers transportiert werden. Die Gefährdungsdaten geben Aufschluss darüber, welche Schutzmaßnahmen die Notfallhelfer treffen müssen, um sich selbst vor dem Gefahrstoff zu schützen. Insbesondere spielen dabei die Explosionsneigung, die Entwicklung von giftigen Dämpfen oder Gasen, die Brennbarkeit und weitere Gefährdungsdaten eine wichtige Rolle. Ausgehend vom Havarieort können aus der hydrogeologischen Umwelt-Datenbank Daten über das Umfeld des Havarieortes, insbesondere über die Durchlässigkeit des Bodens für den Gefahrstoff, die Auswirkung für das Grundwasser im unmittelbaren Bereich des Havarieortes und die Abflusstendenz des Gefahrstoffes in ein Entwässerungssystem ermittelt werden.

Nachdem die lokalen Umweltdaten erfasst und der Gefahrstoff bestimmt ist, wird eine Berechnung des Ausbreitungs- und Eindringungsverhaltens des Gefahrstoffes ins Erdreich und in das Entwässerungssystem vorgenommen. Aus dieser Berechnung können Rückschlüsse auf die Grundwasserverunreinigung und insbesondere über die flächenhafte Verteilung des Gefahrstoffes, insbesondere in Bezug auf Fließrichtung und - geschwindigkeit der Gefahrstoffverunreinigung, ermittelt werden. Somit lassen sich aus der Berechnung Rückschlüsse über Fließrichtung und - geschwindigkeit des Gefahrstoffes ziehen, so dass gezielte Abwehrmaßnahmen ausgehend vom Havarieort nur in bestimmten Bereichen getroffen werden müssen.

Ausgehend von den Ergebnissen der Berechnung wird anschließend eine Bestimmung von besonders schützenswerten Einrichtungen im Fließbereich des Gefahrstoffes und/oder Absperrmöglichkeiten mit Hilfe von Daten aus einer hydrotechnischen Einrichtungs-Datenbank bestimmt. Die hydrotechnische Einrichtungs-Datenbank enthält Informationen über ein Entwässerungssystem, und zeigt dabei technische Absperrmöglichkeiten von Kanälen, Gräben, Sammel- und Überlaufbecken etc. an und identifiziert besonders schützenswerte Einrichtungen, wie Trinkwasserreservoirs, Grundwasseransammlungen, Biotope und Ähnliches. Somit wird in diesem Verfahrensschritt, ausgehend von in den obigen Schritten ermittelten lokalen Informationen und einer extrapolierenden Berechnung des zukünftigen Fließweges und der abzusehenden Verunreinigungen, eine gezielte Bestimmung von Gegenmaßnahmen durchgeführt.

Letztlich werden diese Gegenmaßnahmen ausgegeben, um gezielt den Notfalldiensten mögliche Absperr- und Gegenmaßnahmen aufzuzeigen und besonders schützenswerte Einrichtungen vor Verunreinigungen zu bewahren.

Im Rahmen des Verfahrens bietet es sich als vorteilhaft an, dass die Eingabe und/oder die Ausgabe mittels eines Netzwerkes, insbesondere mittels Internet, Funknetzwerk oder Ähnlichem erfolgen. So können beispielsweise durch Ein- und Ausgabeterminals, die sich bei Notfalldiensten wie Straßenmeistereien, Polizei und Feuerwehr befinden, Havarien gemeldet und nach Durchführung der Berechnung die Berechnungsergebnisse ausgegeben werden. Hierzu ist lediglich ein Internetanschluss notwendig, der bereits in den meisten Notfallzentralen vorhanden ist. Damit wird eine besonders kostengünstige und schnelle technische Umsetzung des Verfahrens ermöglicht.

Vorteilhaft ist es auch möglich, die Eingabe automatisch durch mindestens einen Gefahrstoffsensor durchzuführen, der in einem vorbestimmten Punkt im Erdreich oder in einem Entwässerungssystem angeordnet ist, und zumindest das Auftreten des Gefahrstoffes erkennt. Gerade in besonders havariegefährdeten Bereichen, wie chemischen Anlagen, Flughäfen etc., kann es vorteilhaft sein, einen oder vorzugsweise mehrere Gefahrstoffsensoren an sensiblen Punkten anzubringen, die zumindest das Auftreten des Gefahrstoffes erkennen, und somit automatisch eine Eingabe zum Verfahrensablauf generieren.

Des Weiteren ist es auch vorteilhaft denkbar, dass Eingabedaten aus einem Havarieinformationssystem, insbesondere Katastropheninformationssystem, Verkehrsnachrichtensystem, TMC-System (Traffic Message Channel System) oder Ähnlichem, erfolgt. Üblicherweise werden Havarien insbesondere bei Verkehrsunfällen durch beteiligte Personen gemeldet und oft gleichzeitig mit Meldung an die Polizei auch an überregionale Warndienste, wie Verkehrssendestationen, TMC-Systeme oder Ähnlichem übermittelt. Zur Einsparung von Zeit und schneller Beurteilung von Gegenmaßnahmen können Eingabedaten über Havarieort und Art des Gefahrstoffes aus diesen Systemen automatisch generiert werden.

Insbesondere bei Gefahrguttransporten ist es vorteilhaft, dass die Eingabe des Havarieortes aus einem Positionsortungssystem, insbesondere einem Navigationssystem erfolgt. Denkbar ist beispielsweise, dass Gefahrguttransporte mit Navigationssystemen ausgerüstet sind, die die Position des Gefahrguttransportes automatisch an eine Zentrale, beispielsweise an eine Gefahrguttransportdatenbank, melden. Im Falle einer Havarie kann so verlässlich der Ort des Gefahrguttransportes festgestellt werden und sofort in das Verfahren eingegeben werden.

Zu einer technisch einfachen Realisierbarkeit und einer möglichst kostengünstigen Implementierung des Verfahrens ist es vorteilhaft, dass die Eingabe und/oder die Ausgabe mittels eines WebClients im Netzwerk, insbesondere Internet, Funknetzwerk oder Ähnlichem, erfolgt. Ein WebClient ist ein softwaregestütztes Verfahren, um auf bereits vorhandene Datenstrukturen zugreifen zu können und Eingabe- oder Ausgabedaten über ein bereits installiertes Netzwerk, das auch für andere Zwecke genutzt wird, zu übermitteln. Somit wird eine besonders technisch elegante und kostengünstige Lösung geschaffen, um über bereits vorhandene Netzwerke zusätzliche Daten des Verfahrens übermitteln zu können.

Die notwendige Berechnung des Fließverhaltens und die Bestimmung der besonders schützenswerten Einrichtungen sowie der Absperrmöglichkeiten kann prinzipiell beliebig erfolgen. Besonders empfehlenswert ist es jedoch, wenn die Bestimmung und Berechnung innerhalb eines Netzwerkes, insbesondere Internet, Funknetzwerk oder Ähnlichem erfolgt und auf mindestens einem Bestimmungs- und Berechnungsserver durchgeführt wird. So ist es beispielsweise denkbar, dass für jedes Bundesland, oder jede Bundesstraße ein eigenes Bestimmungs- oder Berechnungs-/Servernetzwerk aufgebaut wird, oder es ist auch zum Zwecke der erleichterten Koordination denkbar, dass ein zentraler Bestimmungs- und Berechnungsserver für eine Vielzahl von havariegefährdeten Bereichen genutzt wird.

Die Gefahrstoffdatenbank enthält Daten über mögliche Gefahrstoffe. Besonders bevorzugt ist die Aufnahme von Fließdaten wie Fließverhalten, Wasserlöslichkeit und Ähnlichem in die Gefahrstoffdatenbank. Des Weiteren ist es besonders vorteilhaft, Gefährdungsdaten, wie Brennbarkeit, Explosivität, Giftigkeit oder Ähnlichem, in die Gefahrstoffdatenbank aufzunehmen.

Aufsetzend auf die vorher angesprochene Netzwerkstruktur ist es besonders vorteilhaft, dass die Gefahrstoffdatenbank durch ein Netzwerk, insbesondere Internet, Funknetzwerk oder Ähnlichem abfragbar und/oder editierbar ist, insbesondere von Notfalldiensten und Speditionen. Das bereits zuvor erwähnte Netzwerk kann dazu benutzt werden, um den Speditionen von Gefahrguttransporten die Möglichkeit zu geben, neue, bisher unbekannte Gefahrstoffe in die Gefahrstoffdatenbank einzugeben, und ermöglicht den Notfalldiensten auch vor Ort, diese Daten aus der Gefahrstoffdatenbank auszulesen. Somit ist eine höhere Flexibilität des Verfahrens gegeben, da neue Gefahrstoffe aktualisiert werden können, und Notfalldienste auf präzise und aktuelle Daten über die Gefährdung des Gefahrstoffes zugreifen können.

In einer besonders bevorzugten Ausführung des Verfahrens enthält die hydrogeologische Umwelt-Datenbank Daten über Oberfläche und/oder Beschaffenheit des Erdreichs und des umgebenden Bodens zumindest in Bereichen großer Havariegefahr, wie beispielsweise Parkplätzen, Tank- und Rastanlagen, Start- und Landebahnen, Schienenanlagen im Bereich von Bahnhöfen etc. Hierzu kann im Gegensatz zu einer lückenlosen Datenbank die Datenmenge erheblich reduziert werden, und auf Bereiche großer Havariegefahr beschränkt bleiben.

Besonders bevorzugt wird eine Ausführung des Verfahrens, bei dem die hydrotechnische Einrichtungs-Datenbank Entwässerungssystemdaten umfasst, die zumindest einige der Daten über Topologie und Zustand eines Entwässerungssystems in Bereichen besonderer Havariehäufigkeit, insbesondere Drainagen, Kanälen, Gräben, Kontrollbauwerke, Absperr- und Umleitungseinrichtungen, Sammelbecken, Überlaufbecken etc. beinhaltet. Somit können in diesen Bereichen besonderer Havariehäufigkeit, wie Betriebsanlagen, Parkplätzen, Bahnhöfen, Flughäfen etc., gezielt detaillierte Informationen bereitgestellt werden, um präzise Aufschlüsse über die hydrotechnischen Anlagen zu erhalten.

Des Weiteren ist es besonders vorteilhaft, wenn die hydrotechnische Einrichtungs-Datenbank Daten über Lage und Ort besonders schützenswerter Einrichtungen, insbesondere Trinkwasserreservoirs, Grundwasservorräte, Heilquellen etc., umfasst. Somit kann eine Verbindung der Daten des Entwässerungssystems mit besonders schützenswerten Einrichtungen dazu benutzt werden, eventuelle Absperrmöglichkeiten zum Schutz dieser besonders schützenswerten Einrichtungen schon im Vorfeld zu identifizieren, und bereits vorgefertigte Notfallpläne auszuführen.

Wie bereits weiter oben angesprochen, bildet die hydrogeologische Umwelt-Datenbank eine Informationsquelle über lokale Daten im Umfeld des Havarieortes und die hydrotechnische Einrichtungs-Datenbank eine flächenausgedehnte Information über das Entwässerungssystem. Da jedoch die Natur dieser Daten und deren Einsatzzweck ähnlich ist, ist es besonders vorteilhaft, wenn hydrogeologische Umwelt-Datenbanken und hydrotechnische Einrichtungsdatenbanken im Wesentlichen identische Daten umfassen, oder im Wesentlichen identisch sind. Dies ermöglicht eine zentrale Aufbereitung und Pflege der Daten, sowie eine verringerte technische Komplexität und kostengünstige Möglichkeit, diese Daten zu sammeln.

Wie bereits bei der Gefahrstoffdatenbank vorgeschlagen, ist es besonders vorteilhaft, wenn die hydrogeologische Umwelt-Datenbank und/oder die hydrotechnische Einrichtungs-Datenbank durch ein Computernetzwerk, insbesondere Internet, Funknetzwerk oder Ähnlichem abfragbar und/oder editierbar sind, insbesondere von Infrastruktur-, Planungs-, Verwaltungs- und Forschungseinrichtungen wie Straßenbauämtern, Straßenmeistereien, Verkehrsministerien, geologischen Instituten etc. Aufgrund der Tatsache, dass Oberflächenversiegelungen und Entwässerungssysteme dynamische Größen sind, die sich im Laufe der Jahre verändern, ist eine Pflege der Daten der hydrogeologischen Umwelt-Datenbank und der hydrotechnischen Einrichtungs-Datenbank unabdingbar, die technisch einfach und sinnvoll durch ein Computernetzwerk, insbesondere Internet und Ähnliches realisiert werden kann. Hierzu sollten die daran beteiligten Verantwortlichen, wie die genannten Infrastruktur-, Planungs-, Verwaltungs- und Forschungseinrichtungen, an den Datenbanken angeschlossen sein und darauf Zugriff haben.

Ausgehend von den Daten über Havarieort, Gefahrstoffart, hydrogeologischer Umwelt-Datenbank und hydrotechnischer Einrichtungs-Datenbank wird eine Berechnung des Ausbreitungs- und Eindringungsverhaltens des Gefahrstoffes ins Erdreich und Entwässerungssystem vorgenommen. Die hierzu durchgeführten Berechnungsverfahren sind praktisch beliebig. Besonders einfache Verfahren sind jedoch aus der Fluiddynamiksimulation bekannt, insbesondere numerische Simulationsmethoden sind weit verbreitet. Ihr Einsatz ist besonders empfehlenswert, da sie eine hohe Verlässlichkeit und eine exakte Prognose des Fliessverhaltens der Gefahrstoffe geben.

Alternativ zu den verschiedenen Fluiddynamik-Simulationsmethoden oder auch unterstützend hierzu, kann eine Berechnung des Ausbreitungs- und Eindringungsverhaltens zumindest teilweise auf Daten von Probemessungen des Ausbreitungs- und Eindringungsverhaltens vorgenommen werden oder auf empirischen Modellen beruhen.

Das Austreten von Gefahrstoffen ist des Weiteren abhängig von Umwelteinflüssen, wie beispielsweise starkem Regen, Niederschlag oder Trockenheit etc. Besonders vorteilhaft berücksichtigt das Verfahren bei der Berechnung des Ausbreitungs- und Eindringungsverhaltens des Gefahrstoffes ins Erdreich und Entwässerungssystem weitere Messdaten, insbesondere Wetterdaten, wie Niederschlag, Temperatur etc. und/oder Kanalmessdaten, wie Strömungsmenge, Strömungsgeschwindigkeit etc. So ist beispielsweise bei starken Regenfällen und hohem Wasseraufkommen eine höhere Fließgeschwindigkeit gegeben, so dass die Gefahrstoffe schneller in die Umwelt abgegeben werden. Auch ist es beispielsweise denkbar, dass in benachbarten Regionen starke Regenfälle niedergehen, die zur erhöhten Fließgeschwindigkeit innerhalb des Kanalsystems führen, ohne dass auf der Oberfläche des Havarieortes Regen fällt. Diese Daten können zur Verbesserung der präzisen Vorhersage des Fließverhaltens genutzt werden.

Nach Abschluss der Berechnung des Fließverhaltens wird eine Bestimmung von besonders schützenswerten Einrichtungen im Fließbereich vorgenommen und Absperrmöglichkeiten definiert. Zur Bestimmung der besonders schützenswerten Einrichtungen und der Absperrmöglichkeiten können besonders vorteilhaft die Daten der hydrogeologischen Umwelt-Datenbank und/oder der hydrotechnischen Einrichtungs-Datenbank verwendet werden, um schnell, zuverlässig und aktuell die Bestimmungsdaten zu gewinnen.

Auf welcher Weise die Ausgabe der berechneten und bestimmten Daten erfolgt, ist prinzipiell beliebig. Bevorzugt wird dabei die Ausgabe auf Eingabeterminals vorgenommen, die auch zur Bereitstellung der Koordinaten des Havarieortes dienen. Jedoch ist es auch möglich und denkbar, dass die Ausgabe eine automatische Aktivierung von technischen Absperrvorrichtungen im Bereich der Ausbreitungsrichtung des Gefahrstoffes, insbesondere Fließwegbeeinflussungseinrichtungen, wie Absperr- und Umleitungseinrichtungen in Kanälen, Auffang- und Überlaufbecken oder dergleichen zum Sammeln oder Umleiten des Gefahrstoffes, bewirkt. Somit ist an die Ausgabe gleichzeitig eine Aktivierung einer technischen Absperrmaßnahme gekoppelt, so dass beispielsweise Sperrschieber, Umleitungsventile und Ähnliches von dem Verfahren automatisch in Abhängigkeit der berechneten und bestimmten Daten aktiviert werden.

Alternativ und zusätzlich zu der oben angesprochenen Ausgabemöglichkeit ist auch eine automatische Übermittlung und Weiterleitung der Daten über mögliche Absperr- und Gegenmaßnahmen an lokale Notfalldienste im Bereich der bestimmten Ausbreitungsrichtung des Gefahrstoffes denkbar. So werden beispielsweise die Koordinaten des Havarieortes lokal in einem Chemiewerk eingegeben, jedoch die Ausgabedaten an eine Feuerwehr oder an einen Notfalldienst in angrenzender Nähe in einer Gemeinde in Fließrichtung des Gefahrstoffs ausgegeben, so dass diese Gemeinde Maßnahmen zum Schutz ihres Kanalsystems treffen kann, bevor überregional Hilfe bereitgestellt werden kann.

Die Erfindung betrifft des Weiteren eine Vorrichtung zur Bestimmung des Fließverhaltens von Gefahrstoffen bei Havarien. Diese erfindungsgemäße Vorrichtung umfasst mindestens eine Eingabevorrichtung zur Eingabe des Havarieortes und der Art des Gefahrstoffes, mindestens eine Gefahrstoffdatenbank über Fließ- und Gefährdungsdaten von Gefahrstoffen, mindestens eine hydrogeologische Umwelt-Datenbank über hydrogeologische Daten zumindest im Umfeld möglicher Havarieorte, insbesondere über Oberflächen- und/oder Bodenbeschaffenheit etc., mindestens eine hydrotechnische Einrichtungs-Datenbank über Entwässerungssysteme und/oder besonders schützenswerte Einrichtungen zumindest im Umfeld möglicher Havarieorte, und mindestens eine Berechnungsvorrichtung zur Berechnung des Ausbreitungs- und Eindringungsverhaltens von Gefahrstoffen im Erdreich und in Entwässerungssystemen, insbesondere Fließrichtung und -geschwindigkeit. Letztlich umfasst die Vorrichtung noch mindestens eine Ausgabevorrichtung zur Ausgabe von Daten über mögliche Absperr- und Gegenmaßnahmen. Hierzu stehen die vorgenannten Vorrichtungen derart im Zusammenhang, dass die Eingabevorrichtung eingegebene Daten über Havarieort und Art des Gefahrstoffes an die Berechnungsvorrichtung übermittelt, die mit Hilfe der Daten der Gefahrstoffdatenbank, der hydrogeologischen Umwelt-Datenbank und der hydrotechnischen Einrichtungs-Datenbank Ausbreitungs- und Eindringungsdaten des Gefahrstoffes berechnet, besonders schützenswerte Einrichtungen im Fließbereich des Gefahrstoffes und/oder Absperrmöglichkeiten bestimmt, und über die Ausgabevorrichtung diese bestimmten Daten ausgibt.

Somit umfasst die erfindungsgemäße Vorrichtung zumindest eine Eingabevorrichtung, eine Gefahrstoffdatenbank, eine hydrogeologische Umwelt-Datenbank, eine hydrotechnische Einrichtungsdatenbank, eine Berechnungsvorrichtung und eine Ausgabevorrichtung.

In den meisten Fällen werden jedoch mehrere Eingabe- und/oder Ausgabevorrichtungen in der Vorrichtung umfasst sein. Eingabe- und Ausgabevorrichtungen dienen dabei zur dezentralen Eingabe der Daten über Havarieort und Art des Gefahrstoffes, wobei beispielsweise die Eingabe des Havarieortes an einem anderen Ort als die Eingabe der Art des Gefahrstoffes erfolgen kann. So ist es denkbar, dass der Havarieort beispielsweise von Notfallkräften eingegeben wird, und die Art des Gefahrstoffes dann beispielsweise von einem Speditionsunternehmen oder Frachtführer an einem anderen Ort eingegeben wird.

Gefahrstoffdatenbank, hydrogeologische Umwelt-Datenbank und hydrotechnische Einrichtungs-Datenbank können beispielsweise gemeinsam auf einem Rechner gespeichert sein, können jedoch aber auch aus vernetzten Datenbanken bestehen.

In vielen Fällen wird die Berechnungsvorrichtung aus einem zentralen Berechnungsserver bestehen, jedoch ist auch denkbar, dass für jeden havariegefährdeten Bereich eine eigene Berechnungsvorrichtung vorgesehen ist, oder dass mehrere havariegefährdete Bereiche als Bündelung von einer Berechnungsvorrichtung überwacht werden.

Bei einer besonders bevorzugten Ausführungsform ist zumindest eine Eingabe- und/oder Ausgabevorrichtung über ein Netzwerk, insbesondere Internet, Funknetzwerk oder Ähnlichem, mit der Berechnungsvorrichtung verbunden. Insbesondere da eine Vielzahl von Eingabe- und/oder Ausgabevorrichtungen vorhanden sein können, ist eine Verbindung über ein Netzwerk wie Internet besonders vorteilhaft, da beliebig viele Ein- und/oder Ausgabevorrichtungen an die Fließverhaltensbestimmungsvorrichtungen angeschlossen werden können, und damit eine besonders flexible und offene Gestaltung mit vielen Teilnehmern realisiert werden kann.

In einer besonders vorteilhaften Ausführungsform ist die Eingabe- und/oder die Ausgabevorrichtung einer Netzwerkapplikation ein Web-Client. WebClients sind softwarebasierte Ein- und/oder Ausgabevorrichtungen, die ein vorhandenes Netzwerk nutzen und über diese anwendungsspezifische Daten übertragen. Beispielsweise ist es denkbar, dass ein WebClient durch einen Internetbrowser dargestellt werden kann, der die Eingabe eines Havarieortes und Art des Gefahrstoffes und des Weiteren die Ausgabe spezifischer Abwehrmaßnahmen durchführt.

In einer besonders vorteilhaften Ausführungsform ist die Eingabevorrichtung mit mindestens einem Gefahrstoffsensor verbunden, der an einem vorbestimmten Punkt im Erdreich und/oder einem Entwässerungssystem angeordnet ist, und zumindest das Auftreten des Gefahrstoffes erkennt. Besonders in Bereichen, in denen eine besondere Havariehäufigkeit vorhersehbar ist, können mehrere Gefahrstoffsensoren im Boden und Kanalsystem vorgesehen werden, die automatisch das Auftreten des Gefahrstoffes melden und damit die Vorrichtung betätigen. Damit ist eine lückenlose und schnelle Überwachung möglicher Havarien und Einleitung von Gegenmaßnahmen möglich.

Vorzugsweise kann die Eingabevorrichtung mit einem Havarieinformationssystem, insbesondere Katastropheninformationssystem, Verkehrsnachrichtensystem, TMC-System oder Ähnlichem, zum Zweck der automatisierten Eingabe verbunden sein. Besonders Verkehrsnachrichtensysteme und TMC-Systeme informieren zeitnah über mögliche Havarien, insbesondere Verkehrsunfälle, so dass die spezifischen Informationen über Art des Gefahrstoffes und Havarieort in die erfindungsgemäße Vorrichtung eingespeist werden können.

Die Eingabe des Havarieortes ist grundsätzlich beliebig möglich. Es ist jedoch denkbar und vorteilhaft, dass die Eingabevorrichtung zur Eingabe des Havarieortes mit einem Positionsortungssystem für Gefahrstoffe, insbesondere einem Navigationssystem, verbunden ist. So können bei besonders gefährlichen Gefahrguttransporten, wie beispielsweise dem Transport von Castorbehältern, leicht brennbaren chemischen Stoffen oder Kampfmittelstoffen, die Gefahrguttransporte mit Positionsortungssystemen ausgerüstet werden, die automatisch den Aufenthaltsort an eine Zentrale, beispielsweise an eine Gefahrguttransportdatenbank melden. Innerhalb der Gefahrguttransportdatenbank können zudem zusätzliche Informationen über Art des Gefahrstoffes abgelegt sein. Im Falle einer Havarie können somit sofort die präzisen Havarieortsinformationen und die Art des Gefahrstoffes durch automatische Übermittlung über die Eingabevorrichtung in die Vorrichtung eingegeben werden.

Der Austausch der Daten zwischen Berechnungsvorrichtung, Gefahrstoffdatenbank und/oder hydrogeologischer Umwelt-Datenbank und/oder hydrotechnischer Einrichtungs-Datenbank kann beliebig realisiert sein. Besonders vorteilhaft sind jedoch diese Datenbanken an ein Netzwerk, insbesondere Internet, Funknetzwerk oder Ähnlichem angeschlossen, um Daten abzufragen oder auch Daten zu editieren. So können Dritte, beispielsweise Spediteure, Forschungseinrichtungen, Straßenmeistereien, Notfalldienste etc., Daten für Gefahrstoffe, für Veränderungen des Kanalsystems, Bodenoberflächenanalysen oder weitere gespeicherte Daten in diese Datenbanken eingeben, indem sie über Internet direkten Zugriff auf die Datenbestände haben. Durch einen netzwerkbasierten Zugriff auf diese Datenbanken ist deren Pflege sehr einfach durchführbar, so dass diese sich ständig auf einem aktuellen Stand befinden, und diese aktuelle Information an allen Orten, an den Ein- oder Ausgabevorrichtungen vorhanden sind, abgefragt werden können.

Naturgemäß beinhalten hydrogeologische Umwelt-Datenbanken und hydrotechnische Einrichtungsdatenbanken im Wesentlichen ähnliche Datensätze. Daher ist es besonders vorteilhaft, wenn die Daten der hydrogeologischen Umwelt-Datenbank und der hydrotechnischen Einrichtungs-Datenbank identisch sind, bzw. die Datenbanken an sich identisch sind. Dies spart Aufwand bei der Pflege, Erstellung und Erweiterung dieser Datenbanken und ermöglicht eine kostenfreundliche Instandhaltung der Vorrichtung.

Die Art und Weise, wie die Berechnungsvorrichtung eine Berechnung des Fließweges des Gefahrstoffes vornimmt, ist prinzipiell beliebig. Besonders bevorzugt wird jedoch die Berechnungsvorrichtung im Wesentlichen eine Fluiddynamikextrapolation des Ausbreitungsweges des Gefahrstoffes im Erdreich und/oder im Entwässerungssystem, gestützt auf Daten der Gefahrstoffdatenbank und/oder hydrogeologischen Umwelt-Datenbank und/oder hydrotechnischen Einrichtungs-Datenbank vornehmen. Davon ausgehend bestimmt die Berechnungsvorrichtung besonders schützenswerte Einrichtungen im Fließbereich des Gefahrstoffes und/oder Absperrmöglichkeiten. Somit führt die Berechnungsvorrichtung die Daten von Gefahrstoffdatenbank, hydrogeologischer Umwelt-Datenbank und hydrotechnischer Einrichtungs-Datenbank zusammen, und berechnet durch Anwendung einer oder mehrerer Fluiddynamikmethoden den Ausbreitungsweg des Gefahrstoffes.

Nach der Extrapolation des Ausbreitungsweges bestimmt die Berechnungsvorrichtung anschließend die besonders schützenswerten Einrichtungen oder die Absperrmöglichkeiten, die in der hydrotechnischen Einrichtungs-Datenbank abgelegt sind. Somit übernimmt die Berechnungsvorrichtung die zentralen Berechnungen und Bestimmungen der Vorrichtung.

Um eine möglichst präzise Vorhersage des Ausbreitungsweges des Gefahrstoffes vornehmen zu können, kann die Vorrichtung vorteilhafterweise mindestens einen Wettermesssensor umfassen, der Daten über Niederschlag, Temperatur etc. im Bereich des Havarieortes misst und an die Berechnungsvorrichtung übermittelt. In Abhängigkeit solcher aktueller Wettermessdaten, die einen wesentlichen Einfluss auf das Fließverhalten des Gefahrstoffes haben, kann die Berechnungsvorrichtung wesentlich präzisere und detailliertere Fluiddynamikberechnungen erstellen.

Des Weiteren ist es vorteilhaft möglich, dass die Vorrichtung einen Kanalmesssensor umfasst, der Daten über Durchflußmenge, Strömungsgeschwindigkeit etc. im Bereich des Havarieortes misst und an die Berechnungsvorrichtung übermittelt. Durch Kenntnis der Zustände im Kanalsystem kann die Berechnungsvorrichtung weitere Rückschlüsse auf die Verbreitung des Gefahrstoffes im Kanalsystem anstellen, und somit die Prognose der Fließrichtung weiter verbessern.

Die oben bezeichneten Messsensoren, insbesondere Wettermesssensor und Kanalmesssensor, können beliebig an die Berechnungsvorrichtung angeschlossen sein. Besonders vorteilhaft nutzen sie jedoch auch das bereits beschriebene Netzwerk, insbesondere Internet, Funknetzwerk oder Ähnliches aus, um ihre Daten mit der Berechnungsvorrichtung auszutauschen. Jedoch ist es auch denkbar, dass die Messsensoren durch ein unabhängiges Netzwerk miteinander und mit der Vorrichtung verbunden sind.

Durch die Möglichkeit des Anschlusses an ein Netzwerk, insbesondere Internet, ist es möglich besonders viele Messsensoren an unterschiedlichen Stellen anzubringen, und aufgrund der generellen Verfügbarkeit des Internets an die erfindungsgemäße Vorrichtung anzuschließen. Dadurch senken sich die Erstellungskosten und erhöht sich die Flexibilität hinsichtlich einer flächenhaften Erweiterung der Fließverhaltenbestimmungsvorrichtung.

Vorzugsweise wird die Ausgabevorrichtung auch als Eingabevorrichtung benutzt. Somit sind Ausgabe- und Eingabevorrichtung in einem Gerät integriert, und können von Notfalldiensten oder anderen Beteiligten (Frachtführer, Flughafenbetreiber, Tankstellenpächter, Werksleitung, Bahnhofsmitarbeiter etc.) sowohl zur Meldung einer Havarie als auch zur Ausgabe möglicher Gegenmaßnahmen verwendet werden.

Prinzipiell wird die oben bezeichnete Vorrichtung manuell bedient, das heißt, es wird eine manuelle Eingabe über die Eingabevorrichtung getätigt und nur dargestellte Informationen über die Ausgabevorrichtung an Notfallkräfte übermittelt, die dann manuell Absperrmaßnahmen einleiten. Es ist jedoch auch denkbar und vorteilhaft, dass die Ausgabevorrichtung des Weiteren Mittel zur automatischen Aktivierung von technischen Absperrvorrichtungen im Bereich der Ausbreitungsrichtung des Gefahrstoffes umfasst, insbesondere Fließwegbeeinflussungseinrichtungen wie Absperr- und Umleitungseinrichtungen in Kanälen, Auffang- und Überlaufbecken oder dergleichen zum Sammeln oder Umleiten des Gefahrstoffes. Somit ist es denkbar, dass die Berechnungsvorrichtung mittelbar oder unmittelbar mit Absperrvorrichtungen verbunden ist, und automatisch nach Abschluss der Berechnung und Bestimmung des Fließweges die Absperrvorrichtungen im Bereich des Fließweges aktiviert. Dies ist besonders einfach bei stationären Anlagen, wie Chemiewerken und Kraftwerken realisierbar, aber auch in Orten besonderer Havariehäufigkeit, wie Tankstellen, Rastanlagen, Bahnhöfen, Flughäfen etc., einfach vorzusehen.

Nach Ermittlung des Fließweges ist der Berechnungsvorrichtung bekannt, an welchen Orten Gegenmaßnahmen eingeleitet werden müssen. Daher kann die Bestimmungsvorrichtung vorteilhafterweise vorsehen, dass die Berechnungsvorrichtung in Abhängigkeit des berechneten Ausbreitungsweges des Gefahrstoffes im Erdreich und/oder im Entwässerungssystem die bestimmten Daten über besonders schützenswerte Einrichtungen im Fließbereich des Gefahrstoffes und/oder Absperrmöglichkeiten nur an lokale Ausgabevorrichtungen im Bereich der bestimmten Ausbreitungsrichtung des Gefahrstoffes übermittelt. Somit gibt die Vorrichtung nur gezielt Daten an unmittelbar betroffene Einsatzkräfte aus, die dann in einem lokal begrenzten Bereich, in dem die Gefahrstoffe einfließen, Abwehrmaßnahmen treffen müssen. Dies dient zu einer verbesserten Koordination und schnelleren Reaktion der Notfallkräfte zur Absperrung einer Havarie.

Im Folgenden werden Ausführungsbeispiele der Erfindung anhand der Zeichnung näher erläutert.

Es zeigen:
- **Fig. 1:**: Verfahrensablaufplan zur Bestimmung des Fließverhaltens von Gefahrstoffen;
- **Fig. 2:**: Schema einer Ausführungsform der erfindungsgemäßen Vorrichtung;
- **Fig. 3:**: Eine weitere Ausführungsform einer erfindungsgemäßen Vorrichtung;
- **Fig. 4:**: Eine dritte Ausführungsform einer erfindungsgemäßen Vorrichtung.

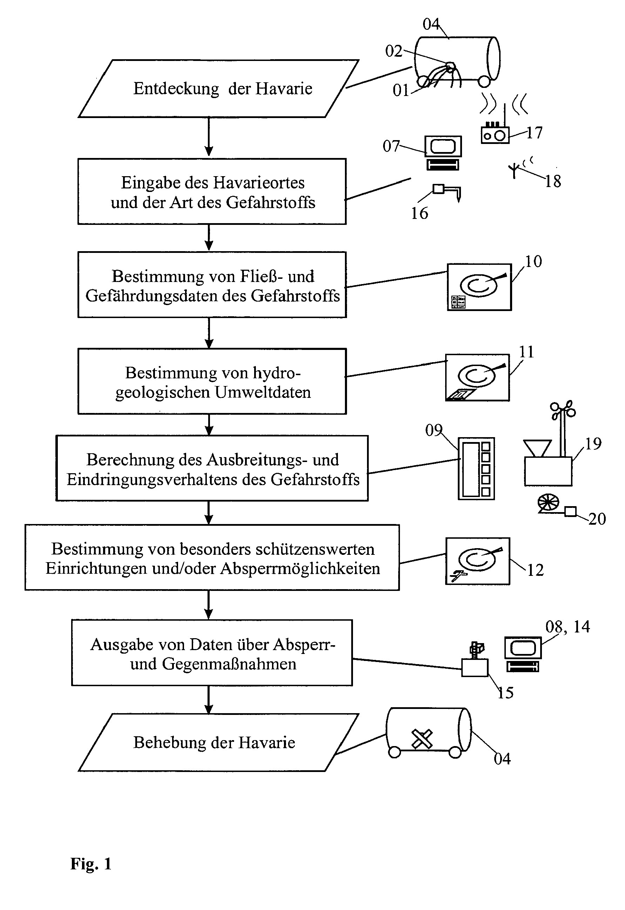

**Fig. 1** zeigt ein Ablaufplan des erfindungsgemäßen Verfahrens. Im ersten Schritt wird eine Havarie 02 entdeckt. Dabei läuft ein Gefahrstoff 01 aus einem Gefahrguttransport 04 aus. Solch eine Meldung einer Havarie 02 kann beispielsweise durch eine Autobahnmeisterei oder einer Leitstelle von Feuerwehr bzw. Polizei entdeckt werden. Im nächsten Schritt wird eine Eingabe des Havarieortes 03 und der Art des Gefahrstoffes 01 durchgeführt. Dabei kann der Havarieort 03 über eine Eingabevorrichtung 07 eingegeben werden, es ist jedoch auch denkbar, das Vorhandensein des Gefahrstoffs 01 über einen Gefahrstoffsensor 16 zu ermitteln und einzugeben. Des Weiteren können Havarieinformationen über ein Havarieinformationssystem 17, das beispielsweise Informationen aus Verkehrsnachrichten, aus einem TMC-System oder Ähnlichem extrahiert, gewonnen werden. Des Weiteren ist es denkbar, den Havarieort 03 aus einem Positionsortungssystem 18, der die Position des Gefahrguttransportes 04 ermittelt, zu erhalten.

Nach Eingabe von Havarieort 03 und Art des Gefahrstoffes 01 erfolgt eine Bestimmung bzw. Bereitstellung von Fließ- und Gefährdungsdaten des Gefahrstoffes 01. Dabei können beispielsweise Daten des Gefahrstoffes 01 aus einer Gefahrstoffdatenbank 10 übernommen werden. Diese Daten können Eigenschaften des Gefahrstoffes 01 wie Viskosität, Fließverhalten, Löslichkeit im Wasser und Gefährdungsdaten wie Explosivität, Brennbarkeit, Giftigkeit etc. enthalten. Parallel oder nachfolgend hierzu erfolgt eine Bestimmung bzw. Bereitstellung von hydrogeologischen Umweltdaten im Bereich des Havarieortes 03. Diese hydrogeologischen Umweltdaten, vornehmlich Erdbodenbeschaffenheit, Versiegelung, Weg zum nächsten Kanalsystem, und Ähnliches werden aus einer hydrogeologischen Umwelt-Datenbank 11 entnommen. Nachdem nun die Daten über den Gefahrstoff 01 und über die hydrogeologischen Umweltverhältnisse vorliegen, wird eine Berechnung des Ausbreitungs- und Eindringungsverhaltens des Gefahrstoffes 01 vorgenommen. Hierzu bedient sich das Verfahren einer Berechnungsvorrichtung 09, die beispielsweise auch Daten über das Wetter durch einen Wettermesssensor 19, oder über die Verhältnisse im Kanalsystem durch einen Kanalmesssensor 20 berücksichtigt. Nachdem das Fließverhalten der Gefahrstoffe 01 berechnet wurde, insbesondere Fließrichtung und Fließgeschwindigkeit, wird eine Bestimmung von besonders schützenswerten Einrichtungen und/oder Absperrmöglichkeiten vorgenommen. Hierzu werden weitere Daten aus einer hydrotechnischen Einrichtungs-Datenbank 12 berücksichtigt. Die hydrotechnische Einrichtungs-Datenbank 12 umfasst detaillierte Pläne des Kanalsystems 06 sowie Absperrmöglichkeiten und bestimmt besonders schützenswerte Einrichtungen wie Teiche, Biotope, Seen, Flüsse, Trinkwasserreservoire und Ähnliches. Nachdem diese Bestimmung ausgeführt wurde, werden die ermittelten Daten über Absperr- und

Gegenmaßnahmen ausgegeben. Die Ausgabe wird hierzu an Ausgabevorrichtungen 08, die identisch mit Eingabevorrichtungen 07 sein können, weitergeleitet. Es ist dabei denkbar, diese Ausgaben nur an lokale Ausgabevorrichtungen 14 im Bereich des Fließortes des Gefahrstoffes 01 auszugeben, und/oder es können durch die Ausgabe automatisierte technische Absperrvorrichtungen 15 aktiviert werden, beispielsweise Sperrschieber, Ventile und Umleitungsmechanismen.

Letztlich wird durch die Absperrmaßnahme eine Behebung der Havarie 02 vorgenommen, so dass die von dem Gefahrguttransport 04 verursachte Verschmutzung der Umwelt aufgehalten werden kann.

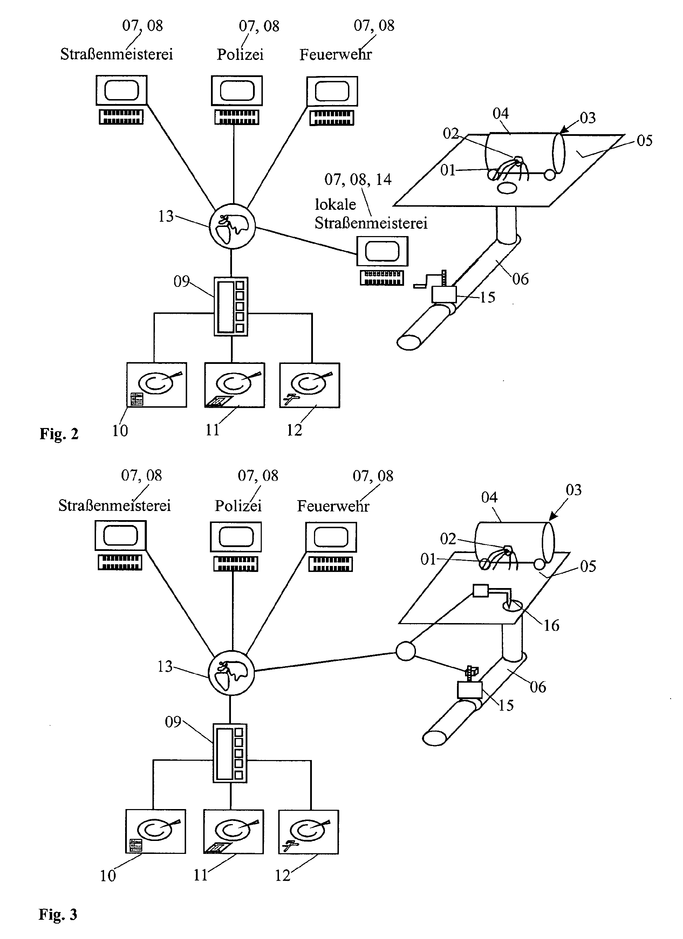

**Fig. 2** zeigt schematisch einen möglichen Aufbau einer Ausführungsform der Vorrichtung zur Bestimmung des Fließverhaltens von Gefahrstoffen 01. Die Ausführungsform umfasst dabei Ein- und Ausgabevorrichtungen 07, 08, die sich bei verschiedenen Straßenmeistereien, Polizeistellen und Feuerwehreinsatzzentralen befinden. Tritt eine Havarie 02 durch Austritt eines Gefahrstoffes 01, beispielsweise aus einem Gefahrguttransport 04 auf, so werden durch die Eingabevorrichtungen 07 die Havarie 02 über ein Netzwerk 13, das beispielsweise ein Internetnetzwerk sein kann, an eine Berechnungsvorrichtung 09 gemeldet. Die Berechnungsvorrichtung 09 hat Zugriff auf eine Gefahrstoffdatenbank 10, eine hydrogeologische Umwelt-Datenbank 11 und eine hydrotechnische Einrichtungs-Datenbank 12. Ausgehend von den Eingabeinformationen durch die Eingabevorrichtungen 07 über Havarieort 03 und Art des Gefahrstoffes werden aus der Gefahrstoffdatenbank 10 Fließverhaltensdaten und Gefährdungsdaten des Gefahrstoffes 01 ermittelt und aus der hydrogeologischen Umwelt-Datenbank 11 die Bodenbeschaffenheit des Erdreichs 05 in der Umgebung des Havarieortes 03 bestimmt. Davon ausgehend berechnet die Berechnungsvorrichtung 09 den weiteren Fließweg des Gefahrstoffes 01, insbesondere im Entwässerungssystem 06. Mit Hilfe der Daten der hydrotechnischen Einrichtungs-Datenbank 12 bestimmt die Berechnungsvorrichtung 09 mögliche Absperrvorrichtungen 15, die sich im Fließbereich des Gefahrstoffes befinden und gibt mögliche Absperrmaßnahmen an eine lokale Straßenmeisterei 14 in der Nähe der Absperrvorrichtung 15 aus. Die lokale Straßenmeisterei 14 betätigt aufgrund der ausgegebenen Daten die Absperrvorrichtung 15, um ein weiteres Verbreiten des Gefahrstoffes 01 im Kanalsystem 06 zu unterbinden.

**Fig. 3** zeigt eine weitere Ausführungsform der Bestimmungsvorrichtung, die auf der Struktur der in **Fig. 2** dargestellten Ausführungsform beruht. Im Gegensatz zu der rein manuell betriebenen Ausführungsform, die in **Fig. 2** dargestellt ist, umfasst die Ausführungsform in **Fig. 3** einen Gefahrstoffsensor 16 und eine automatisch betriebene Absperrvorrichtung 15, die mittels Motorkraft einen Schiebemechanismus zur Abriegelung des Entwässerungssystems 06 betätigt. Tritt nun Gefahrstoff 01 an einem Havarieort 03 aus einem Gefahrguttransport 04 aus und dringt über das Erdreich 05 in das Entwässerungssystem 06, so werden Notfalldienste wie Straßenmeisterei, Polizei oder Feuerwehr, über Eingabevorrichtungen 07 Daten über die Havarie 02 über das Internet 13 an eine Berechnungsvorrichtung in Form eines Berechnungsservers 09 weiter geben. Parallel und unabhängig hiervon stellen ein oder mehrere Gefahrstoffsensoren 16 das Auftreten des Gefahrstoffes 01 insbesondere beim Endringen in das Kanalsystem 06 fest und übermitteln ihre Messdaten ebenfalls über das Netzwerk 13 an die Berechnungsvorrichtung 09. Eine Identifikation des Gefahrstoffes 01 kann beispielsweise durch eine dem Gefahrguttransport 04 zugeordnete Gefahrstoffkennung erfolgen. Die Gefahrstoffkennung kann durch einen mit dem Gefahrguttransport 04 verbundenen Gefahrguttransponder übermittelt werden, der gleichzeitig zur Ortung des Gefahrguttransports 04 verwendbar ist.

Die Berechnungsvorrichtung 09 berechnet daraufhin mit Hilfe der Daten der Gefahrstoffdatenbank 10 und der hydrogeologischen Umwelt-Datenbank 11 den weiteren Fließweg und die Fließgeschwindigkeit des Gefahrstoffes 01 und leitet automatisch Abwehrmaßnahmen dadurch ein, dass sie durch die hydrotechnische Einrichtungs-Datenbank 12 im Weg der Fließrichtung des Gefahrstoffes befindliche automatisierte technische Absperrvorrichtungen 15 bestimmt und diese automatisch über das Netzwerk 13 aktiviert. Parallel und unabhängig hierzu werden die Abwehrmaßnahmen an die Notfalldienste, wie Straßenmeisterei, Polizei, Feuerwehr, von der Berechnungsvorrichtung 09 über das Internet 13 auf Ausgabevorrichtungen 08 ausgeben. Somit ist das in **Fig. 3** dargestellte Ausführungsbeispiel in der Lage, selbstständig eine Havarie zu entdecken und geeignete Abwehrmaßnahmen im Fließbereich des Gefahrstoffes einzuleiten. Begleitend hierzu können jedoch zusätzliche Daten über manuelle Eingabevorrichtungen 07 wie Eingabeterminals von Notfalldiensten über das Internet eingegeben werden und Abwehrmaßnahmen über diese Terminals an beteiligte Notfalldienste ausgegeben werden.

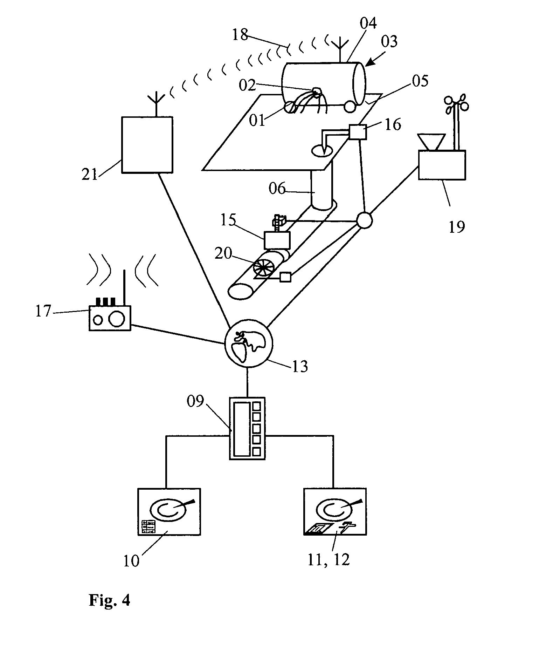

**Fig. 4** zeigt ein Ausführungsbeispiel einer vollautomatischen Vorrichtung zur Bestimmung des Fließverhaltens von Gefahrstoffen 01 und zur Einleitung möglicher Gegenmaßnahmen. Tritt ein Gefahrstoff 01 bei einer Havarie 02 aus einem Gefahrguttransport 04 aus, so wird dieser Gefahrstoff 01 über das Erdreich 05 in ein Entwässerungssystem 06 geleitet. Durch einen Gefahrstoffsensor 16 wird das Austreten des Gefahrstoffes in das Entwässerungssystem 06 über das Netzwerk 13 an eine Berechnungsvorrichtung 09 gemeldet. Begleitend hierzu wird der Havarieort 03 durch ein Positionsortungssystem 18 an eine Gefahrguttransportdatenbank 21 übermittelt und von dieser Gefahrguttransportdatenbank 21 ebenfalls über das Internet 13 an die Berechnungsvorrichtung 09 übermittelt. Parallel und unabhängig hiervon ist des Weiteren ein Havarieinformationssystem 17 vorgesehen, dass beispielsweise Verkehrsfunknachrichten nach Havarieinformationen überwacht und diesbezüglich Informationen über Havarieort 03 und Art des Gefahrstoffes 01 vom Havarieinformationssystem 17 über das Internet 13 an die Berechnungsvorrichtung 09 meldet. Die Berechnungsvorrichtung 09 ermittelt aus der Art des Gefahrstoffes 01 dessen Fließverhalten und Gefährdungseigenschaft mittels der Gefahrstoffdatenbank 10 und erhält Informationen über die hydrogeologischen Umweltstrukturen am Havarieort 03 aus der hydrogeologischen Umwelt-Datenbank 11 sowie Informationen über das Entwässerungssystem 06 aus der hydrotechnischen Einrichtungs-Datenbank 12, die in diesem Fall in einer einzigen Datenbank integriert sind. Die Berechnungsvorrichtung 09 ermittelt ausgehend von diesen Daten Fließweg und Fließgeschwindigkeit des Gefahrstoffes 02 im Entwässerungssystem 06 und leitet automatisch Daten an eine technische Absperrvorrichtung 15, die motorbetrieben ist, weiter, so dass diese im Bereich des Fließweges des Gefahrstoffes 01 das Entwässerungssystem 06 absperrt. Dabei berücksichtigt die Berechnungsvorrichtung 09 Wetterdaten, die von einem Wettermesssensor 19 gemessen werden, sowie Kanaldaten eines Kanalmesssensor 20, der Kanalfließgeschwindigkeit und Kanalfließmenge ebenfalls gestützt auf das Internet 13 an die Berechnungsvorrichtung 09 weiter gibt. Somit zeigt Fig. 4 eine Ausführungsform der erfindungsgemäßen Vorrichtung, die vollständig automatisch und autark Gegenmaßnahmen im Falle einer Havarie einleitet.

Nachfolgend wird ein mögliches realitätsnahes Ablaufszenario der vorliegenden Erfindung skizziert:
1. Eine Meldung einer Havarie läuft bei einer zuständigen Autobahnmeisterei oder direkt bei der Leitstelle von Feuerwehr bzw. Polizei auf.
2. Am Auskunftsarbeitsplatz wird mittels eines Internetbrowsers eine Eingabemaske geöffnet.
3. Der Havariestandort und -zeitpunkt wird mittels freiem Text oder anhand von Auswahllisten oder der Markierung direkt im angezeigten Plan hinterlegt. Dabei werden auch Daten über den auslaufenden Gefahrstoff übermittelt.
4. Automatisch wird die nächstmögliche Oberflächenentwässerung ermittelt, oder diese wird von Hand eingegeben.
5. Eine Ausbreitungsberechnung wird gestartet und der Fließweg wird markiert. Eine Anschrift der errechneten Echtzeit und Fließzeit an möglichen Absperrpunkten wird daraufhin ausgegeben.
6. Die Absperrmöglichkeiten werden ausgedruckt oder versandt, beispielsweise per E-Mail als Planinformation mit Anfahrskizze für Bereiche, welche nicht direkt vom Havariestandort aus erreichbar sind, für Vororteinsatzkräfte bzw. für die Leitstelle der Feuerwehr. Dabei wird die gesamte Ein- und Ausgabeprozedur als Webanwendung realisiert. Die Darstellung der Information erfolgt über einen WebClient. Informationsarbeitsplätze werden flächendeckend in die Straßenmeistereien sowie in den Polizei- und Feuerwehrleitstellen installiert. Durch die webbasierte Lösung wird die Installation der Anwendung sehr vereinfacht, da lediglich ein Internetzugang erforderlich ist.

Es können noch weitere Bausteine in das Verfahren oder in die Vorrichtung integriert werden:
1. **GPS-Tracking von Gefahrguttransporten.** Die aktuelle Position von Gefahrguttransporten kann auf Grundlage moderner Navigationssysteme bestimmt werden.
2. **Zentrale Speicherung von Informationen über das jeweils transportierte Gefahrgut einer Datenbank.**
3. **Störfallmanagement.** Im Falle eines Gefahrgutunfalls kann der Ort des Unfalls und die Art des Gefahrguts ohne Verzögerung von den zuständigen Einsatzkräften (Polizei, Feuerwehr) abgerufen werden. Sofern der Gefahrgutunfall eine (Teil-) Sperrung eines Autobahnabschnittes und damit Stau verursacht hat, kann durch das System eine schnelle Räumung erzielt und damit Staus vermieden werden.
4. **Notrufsystem**. Durch die zuständige Ausstattung der Gefahrguttransporte mit einer e-call-Funktion geht der Notruf unmittelbar bei den Einsatzkräften ein. Dies bewegt die weitere Beschleunigung der Räumung der Störfallstelle.

## Patentansprüche

1. Verfahren zur Bestimmung des Fließverhaltens von Gefahrstoffen (01) bei Havarien (02),
**gekennzeichnet durch**
die folgenden Verfahrensschritte:
- Bereitstellung der Koordinaten des Havarieortes (03) und der Identifikation des Gefahrstoffs (01);
- Bereitstellung von Fließ- und Gefährdungsdaten des Gefahrstoffs (01) aus einer Gefahrstoff-Datenbank (10);
- Bereitstellung von hydrogeologischen Umweltdaten im Umfeld des Havarieortes (03) aus einer hydrogeologischen Umwelt-Datenbank (11);
- Bereitstellung der Daten von hydrotechnischen Einrichtungen aus einer hydrotechnischen Einrichtungs-Datenbank (12);
- Berechnung des Ausbreitungs- und Eindringungsverhaltens des Gefahrstoffs (01) ins Erdreich (05) und Entwässerungssystem (06), insbesondere der daraus resultierenden Grundwasserverunreinigung, insbesondere Fließrichtung und Geschwindigkeit der Gefahrstoff-Verunreinigung, beruhend auf den Fließ- und Gefährdungsdaten des Gefahrstoffs (01) und den hydrogeologischen Umweltdaten;
- Bestimmung von besonders schützenswerten Einrichtungen im Fließbereich des Gefahrstoffs (01) und/oder Absperrmöglichkeiten, beruhend auf der Berechnung des Ausbreitungs- und Eindringungsverhaltens des Gefahrstoffs (01), aus der hydrotechnischen Einrichtungs-Datenbank (12);
- Ausgabe von Daten über mögliche Absperr- und Gegenmaßnahmen beruhend auf den bestimmten Absperrmöglichkeiten und den bestimmten besonders schützenswerten Einrichtungen.

2. Verfahren nach Anspruch 1,
**dadurch gekennzeichnet,**
**dass** die Bereitstellung der Koordinaten des Havarieortes (03) und/oder die Ausgabe der Daten mittels eines Netzwerkes (13), insbesondere mittels Internet, Funknetzwerk oder Ähnlichem erfolgt.

3. Verfahren nach einem der vorangegangenen Ansprüche,
**dadurch gekennzeichnet,**
**dass** die Bereitstellung der Koordinaten des Havarieortes (03) vermittels mindestens eines Gefahrstoffsensors (16) erfolgt, der an einem vorbestimmten Punkt im Erdreich (05) oder in einem Entwässerungssystem (06) angeordnet ist, und zumindest das Auftreten des Gefahrstoffs (01) erkennt.

4. Verfahren nach einem der vorangegangenen Ansprüche,
**dadurch gekennzeichnet,**
**dass** die Bereitstellung der Koordinaten des Havarieortes (03) vermittels eines Havarieinformationssystems (17), insbesondere Katastropheninformationssystems, Verkehrsnachrichtensystems, TMC-Systems (Traffic Message Channel-System) oder Ähnlichem, erfolgt.

5. Verfahren nach einem der der vorangegangenen Ansprüche,
**dadurch gekennzeichnet,**
**dass** die Bereitstellung der Koordinaten des Havarieortes (03) vermittels eines Positionsortungssystems (18), insbesondere einem Navigationssystem, erfolgt.

6. Verfahren nach Anspruch 5,
**dadurch gekennzeichnet,**
**dass** die Bereitstellung der Koordinaten des Havarieortes (03) durch Zugriff auf ein Gefahrguttransport-Datenbank (21) erfolgt.

7. Verfahren nach einem der vorangegangenen Ansprüche,
**dadurch gekennzeichnet,**
**dass** die Bereitstellung der Koordinaten des Havarieortes (03) vermittels eines Web-Clients im Netzwerk (13), insbesondere Internet, Funknetzwerk oder Ähnlichem, erfolgt.

8. Verfahren nach einem der vorangegangenen Ansprüche,
**dadurch gekennzeichnet,**
**dass** die Bestimmungen und Berechnung innerhalb eines Netzwerkes (13), insbesondere Internet, Funknetzwerk oder Ähnlichem, auf mindestens einem Bestimmungs - und Berechnungsserver durchgeführt wird.

9. Verfahren nach einem der vorangegangenen Ansprüche,
**dadurch gekennzeichnet,**
**dass** die Gefahrstoff-Datenbank (10) Daten über Fließverhalten, Wasserlöslichkeit und Ähnlichem sowie Gefährdungsdaten, wie Brennbarkeit, Explosivität, Giftigkeit oder Ähnlichem, umfasst.

10. Verfahren nach einem der vorangegangenen Ansprüche,
**dadurch gekennzeichnet,**
**dass** die Gefahrstoff-Datenbank (10) durch ein Netzwerk (13), insbesondere Internet, Funknetzwerk oder Ähnlichem, abfragbar und/oder editierbar ist.

11. Verfahren nach einem der vorangegangenen Ansprüche,
**dadurch gekennzeichnet,**
**dass** die hydrogeologische Umwelt-Datenbank (11) Daten über Oberflächen- und/oder Bodenbeschaffenheit zumindest in Bereichen großer Havariegefahr umfasst.

12. Verfahren nach einem der vorangegangenen Ansprüche,
**dadurch gekennzeichnet,**
**dass** die hydrotechnische Einrichtungs-Datenbank (12) Entwässerungssystemdaten umfasst, die zumindest einige der Daten über Topologie und Zustand eines Entwässerungssystems (06) in Bereichen besonderer Havariehäufigkeit, insbesondere Drainagen, Kanäle, Gräben, Kontrollbauwerke, Absperr- und Umleitungseinrichtungen (15), Sammelbecken, Überlaufbecken etc. beinhaltet.

13. Verfahren nach einem der vorangegangenen Ansprüche,
**dadurch gekennzeichnet,**
**dass** die hydrotechnische Einrichtungs-Datenbank Daten über Lage und Ort besonders schützenswerter Einrichtungen, insbesondere Trinkwasserreservoirs, Grundwasservorräte, Heilquellen etc., umfasst.

14. Verfahren nach einem der vorangegangenen Ansprüche,
**dadurch gekennzeichnet,**
**dass** die hydrogeologische Umwelt-Datenbank (11) und hydrotechnische Einrichtungs-Datenbank im Wesentlichen identische Daten umfassen oder im Wesentlichen identisch sind.

15. Verfahren nach einem der vorangegangenen Ansprüche,
**dadurch gekennzeichnet,**
**dass** die hydrogeologische Umwelt-Datenbank (11) und/oder die hydrotechnische Einrichtungs-Datenbank durch ein Computer-Netzwerk (13), insbesondere Internet, Funknetzwerk oder Ähnlichem, abfragbar und/oder editierbar sind, insbesondere von Infrastruktur-, Planungs-, Verwaltungs- und Forschungseinrichtungen, wie Straßenbauämtern, Straßenmeistereien, Verkehrsministerien, geologischen Instituten etc.

16. Verfahren nach einem der vorangegangenen Ansprüche,
**dadurch gekennzeichnet,**
**dass** die Berechnung des Ausbreitungs- und Eindringungsverhaltens des Gefahrstoffs (01) ins Erdreich (05) und Entwässerungssystem (06) zumindest teilweise basierend auf Fluiddynamik-Simulationsmethoden, insbesondere numerische Simulationsmethoden, erfolgt.

17. Verfahren nach einem der vorangegangenen Ansprüche,
**dadurch gekennzeichnet,**
**dass** die Berechnung des Ausbreitungs- und Eindringungsverhaltens des Gefahrstoffs (01) ins Erdreich (05) und Entwässerungssystem (06) zumindest teilweise basierend auf Daten von Probemessungen des Ausbreitungs- und Eindringungsverhaltens und/oder auf empirischen Modellen erfolgt.

18. Verfahren nach einem der vorangegangenen Ansprüche,
**dadurch gekennzeichnet,**
**dass** die Berechnung des Ausbreitungs- und Eindringungsverhaltens des Gefahrstoffs (01) ins Erdreich (05) und in das Entwässerungssystem basierend auf Wetterdaten, wie Niederschlag, Temperatur etc und/oder Kanalmessdaten wie Strömungsmenge, Strömungsgeschwindigkeit etc.,erfolgt.

19. Verfahren nach einem der vorangegangenen Ansprüche,
**dadurch gekennzeichnet,**
**dass** die Bestimmung von besonders schützenswerten Einrichtungen im Fließbereich des Gefahrstoffs (01) und Absperrmöglichkeiten vermittels einer Extrapolation der Ausbreitungsrichtung des Gefahrstoffs (01), insbesondere unter Berücksichtigung von Daten der hydrogeologischen Umwelt-Datenbank (11) und/oder der hydrotechnischen Einrichtungs-Datenbank (12), erfolgt.

20. Verfahren nach einem der vorangegangenen Ansprüche,
**dadurch gekennzeichnet,**
**dass** die Ausgabe von Daten weiterhin umfasst:
- Ausgabe von Daten zur automatischen Aktivierung von technischen Absperrvorrichtungen (15) im Bereich der Ausbreitungsrichtung des Gefahrstoffs (01), insbesondere Fließwegbeeinflussungseinrichtungen, wie Absperr- und Umleitungseinrichtungen (15) in Kanälen, Auffang- und Überlaufbecken oder dergleichen, zum Sammeln oder Umleiten des Gefahrstoffs (01).

21. Verfahren nach einem der vorangegangenen Ansprüche,
**dadurch gekennzeichnet,**
**dass** die Ausgabe von Daten weiterhin umfasst:
- Übermittlung von Daten über mögliche Absperr- und Gegenmaßnahmen an lokale Notfalldienste im Bereich der bestimmten Ausbreitungsrichtung des Gefahrstoffs (01).

22. Vorrichtung zur Bestimmung des Fließverhaltens von Gefahrstoffen (01) bei Havarien (02)
**gekennzeichnet dadurch,**
**dass** die Vorrichtung mindestens eine Eingabevorrichtung (07) zur Bereitstellung der Koordinaten des Havarieortes (03) und der Identifikation des Gefahrstoffs (01);
mindestens eine Gefahrstoff-Datenbank (10) über Fließ- und Gefährdungsdaten von Gefahrstoffen (01);
mindestens eine hydrogeologische Umwelt-Datenbank (11) über hydrologische Daten zumindest im Umfeld möglicher Havarieorte (03), insbesondere über Oberflächen- und/oder Bodenbeschaffenheit, etc; mindestens eine hydrotechnische Einrichtungs-Datenbank (12) über Entwässerungssysteme (06) und/oder besonders schützenswerte Einrichtungen zumindest im Umfeld möglicher Havarieorte (03); mindestens eine hydrotechnische Einrichtungs-Datenbank mit Daten von hydrotechnischen Einrichtungen;
mindestens eine Berechnungsvorrichtung (09) zur Berechnung des Ausbreitungs- und Eindringungsverhaltens von Gefahrstoffen (01) im Erdreich (05) und Entwässerungssystemen (06), insbesondere Fließrichtung und Geschwindigkeit;
mindestens eine Ausgabevorrichtung (08) zur Ausgabe von Daten über mögliche Absperr- und Gegenmaßnahmen umfasst,
wobei die Eingabevorrichtung (07) eingegebene Daten über Havarieort (03) und Art des Gefahrstoffs (01) an die Berechnungsvorrichtung (09) übermittelt, die mithilfe der Daten der Gefahrstoff-Datenbank (10), der hydrogeologische Umwelt-Datenbank (11) und der hydrotechnische Einrichtungs-Datenbank (12) Ausbreitungs- und Eindringungsdaten des Gefahrstoffs (01) berechnet, besonders schützenswerten Einrichtungen im Fließbereich des Gefahrstoffs (01) und/oder Absperrmöglichkeiten bestimmt, und über die Ausgabevorrichtung (08) diese bestimmten Daten ausgibt.

23. Vorrichtung nach Anspruch 22,
**dadurch gekennzeichnet,**
**dass** zumindest eine Eingabevorrichtung (07) über ein Netzwerk (13), insbesondere Internet, Funknetzwerk oder Ähnlichem, mit der Berechnungsvorrichtung (09) verbunden sind.

24. Vorrichtung nach Anspruch 22 oder 23,
**dadurch gekennzeichnet,**
**dass** die Eingabevorrichtung (07) eine Netzwerkapplikation, insbesondere ein Web-Client ist.

25. Vorrichtung nach einem der vorangegangen Vorrichtungsansprüche,
**dadurch gekennzeichnet,**
**dass** die Eingabevorrichtung (07) mit mindestens einem Gefahrstoffsensor (16) verbunden ist, der an einem vorbestimmten Punkt im Erdreich (05) oder in einem Entwässerungssystem (06) angeordnet ist, und zumindest das Auftreten des Gefahrstoffs (01) erkennt.

26. Vorrichtung nach einem der vorangegangen Vorrichtungsansprüche,
**dadurch gekennzeichnet,**
**dass** die Eingabevorrichtung (07) mit einem Havarieinformationssystem (17), insbesondere Katastropheninformationssystem, Verkehrsnachrichtensystem, TMC-System (Traffic Message Channel-System) oder Ähnlichem, zum Zweck der automatisierten Eingabe verbunden ist.

27. Vorrichtung nach einem der vorangegangen Vorrichtungsansprüche,
**dadurch gekennzeichnet,**
**dass** die Eingabevorrichtung (07) zur Eingabe des Havarieortes (03) mit einem Positionsortungssystem (18) für Gefahrstoffe (01), insbesondere einem Navigationssystem, verbunden ist.

28. Vorrichtung nach einem der vorangegangen Vorrichtungsansprüche,
**dadurch gekennzeichnet,**
**dass** die Eingabevorrichtung (07) zur Eingabe des Havarieortes (03) mit einer Gefahrguttransport-Datenbank (21) verbunden ist.

29. Vorrichtung nach einem der vorangegangen Vorrichtungsansprüche,
**dadurch gekennzeichnet,**
**dass** Gefahrstoff-Datenbank (10) und/oder hydrogeologische Umwelt-Datenbank (11) und/oder hydrotechnische Einrichtungs-Datenbank (12) an ein Netzwerk (13), insbesondere Internet, Funknetzwerk oder Ähnlichem, angeschlossen sind, um Daten abzufragen oder zu editieren.

30. Vorrichtung nach einem der vorangegangen Vorrichtungsansprüche,
**dadurch gekennzeichnet,**
**dass** die hydrogeologische Umwelt-Datenbank (11) und die hydrotechnische Einrichtungs-Datenbank (12) im Wesentlichen identische Daten beinhalten.

31. Vorrichtung nach einem der vorangegangen Vorrichtungsansprüche 19 bis 23,
**dadurch gekennzeichnet,**
**dass** die hydrogeologische Umwelt-Datenbank (11) und die hydrotechnische Einrichtungs-Datenbank (12) identisch sind.

32. Vorrichtung nach einem der vorangegangen Vorrichtungsansprüche,
**dadurch gekennzeichnet,**
**dass** die Berechnungsvorrichtung (09) im Wesentlichen eine Fluiddynamik-Extrapolation des Ausbreitungsweges des Gefahrstoffs (01) im Erdreich (05) und/oder im Entwässerungsystem gestützt auf Daten der Gefahrstoff-Datenbank (10) und/oder hydrogeologische Umwelt-Datenbank (11) und/oder hydrotechnische Einrichtungs-Datenbank (12) vornimmt und davon ausgehend besonders schützenswerten Einrichtungen im Fließbereich des Gefahrstoffs (01) und/oder Absperrmöglichkeiten bestimmt.

33. Vorrichtung nach einem der vorangegangen Vorrichtungsansprüche,
**dadurch gekennzeichnet,**
**dass** die Vorrichtung des Weiteren mindestens einen Wettermesssensor (19) umfasst, der Daten über Niederschlag, Temperatur, etc. im Bereich des Havarieortes (03) misst und an die Berechnungsvorrichtung (09) übermittelt.

34. Vorrichtung nach einem der vorangegangen Vorrichtungsansprüche,
**dadurch gekennzeichnet,**
**dass** die Vorrichtung des Weiteren mindestens einen Kanalmesssensor (20) umfasst, der Daten über Durchflußmenge, Strömungsgeschwindigkeit etc. im Bereich des Havarieortes (03) misst und an die Berechnungsvorrichtung (09) übermittelt.

35. Vorrichtung nach einem der vorangegangen Vorrichtungsansprüche 33 oder 34,
**dadurch gekennzeichnet,**
**dass** der Messsensor über ein Netzwerk (13), insbesondere Internet, Funknetzwerk oder Ähnlichem, mit der Berechnungsvorrichtung (09) verbunden ist.

36. Vorrichtung nach einem der vorangegangen Vorrichtungsansprüche,
**dadurch gekennzeichnet,**
**dass** zumindest eine Ausgabevorrichtung (08) über ein Netzwerk (13), insbesondere Internet, Funknetzwerk oder Ähnlichem, mit der Berechnungsvorrichtung (09) verbunden sind.

37. Vorrichtung nach einem der vorangegangen Vorrichtungsansprüche,
**dadurch gekennzeichnet,**
**dass** die Ausgabevorrichtung (08) eine Netzwerkapplikation, insbesondere ein Web-Client, ist.

38. Vorrichtung nach einem der vorangegangen Vorrichtungsansprüche,
**dadurch gekennzeichnet,**
**dass** die Ausgabevorrichtung (08) auch als Eingabevorrichtung (07) dient.

39. Vorrichtung nach einem der vorangegangen Vorrichtungsansprüche,
**dadurch gekennzeichnet,**
**dass** die Ausgabevorrichtung (08) des weiteren Mittel zur automatischen Aktivierung von technischen Absperrvorrichtungen (15) im Bereich der Ausbreitungsrichtung des Gefahrstoffs (01) umfasst, insbesondere Fließwegbeeinflussungseinrichtungen, wie Absperr- und Umleitungseinrichtungen (15) in Kanälen, Auffang- und Überlaufbecken oder dergleichen zum Sammeln oder Umleiten des Gefahrstoffs (01).

40. Vorrichtung nach einem der vorangegangen Vorrichtungsansprüche,
**dadurch gekennzeichnet,**
**dass** die Berechnungsvorrichtung (09) in Abhängigkeit des berechneten Ausbreitungsweges des Gefahrstoffs (01) im Erdreich (05) und/oder im Entwässerungssystem (06) die bestimmten Daten über besonders schützenswerten Einrichtungen im Fließbereich des Gefahrstoffs und/oder Absperrmöglichkeiten nur an lokale Ausgabevorrichtungen (14) im Bereich der bestimmten Ausbreitungsrichtung des Gefahrstoffs (01) übermittelt.
